# EUROPÄISCHE PATENTANMELDUNG

(11) **EP 2 197 160 A1**
(43) Veröffentlichungstag der Anmeldung: **16.06.2010**
(21) Anmeldenummer: 08021475.2
(22) Anmeldetag: 10.12.2008
(51) Int. Cl.: H04L 12/46, H04L 12/40

(54) **Azyklischer Datentransfer über einen Feldbuskoppler**

(71) Anmelder: Siemens Aktiengesellschaft, 80333 München (DE)
(72) Erfinder: Biehler, Georg, 90453 Nürnberg (DE); Böhme, Hagen, Dr., 09235 Burkhardtsdorf (DE); Dausend, Stefan, 91126 Schwabach (DE); Prieler, Siegfried, 86660 Tapfheim (DE)

(57) **Zusammenfassung**

Die vorliegende Erfindung betrifft einen Feldbuskoppler (4), ein System (1) mit mindestens einem Feldbuskoppler (4), ein Übertragungsverfahren für azyklische Daten über einen Feldbuskoppler (4) und ein Computerprogrammprodukt. Insbesondere betrifft die vorliegende Erfindung einen Feldbuskoppler (4) der eingerichtet ist, um die Übertragung azyklischer Daten zu ermöglichen. Der Feldbuskoppler (4) besitzt eine erste und eine zweite Netzseite (10, 11), wobei jede Netzseite mindestens eine Schnittstelle zum Anschließen eines Feldbusses (2, 3) besitzt. Auf der ersten Netzseite (10) ist mindestens ein Ausgangsmodul (5) zum Empfangen eines Ausgangsdatensatzes eines ersten Feldbusses (2) vorgesehen. Dieser Datensatz wird von der ersten auf die zweite Netzseite gespiegelt und in einem Speicher (8) zwischengespeichert. Der gespiegelte Datensatz kann so über ein Eingangsmodul (6) auf der zweiten Netzseite (11) einem zweiten Feldbus (3) als Eingangsdatensatz bereitgestellt werden.

## Beschreibung

Die vorliegende Erfindung betrifft einen Feldbuskoppler, ein System mit mindestens einem Feldbuskoppler, ein Übertragungsverfahren für azyklische Daten über einen Feldbuskoppler und ein Computerprogrammprodukt. Insbesondere betrifft die vorliegende Erfindung einen Feldbuskoppler der eingerichtet ist, um die Übertragung azyklischer Daten zu ermöglichen.

In der Automatisierungswelt gibt es heute Feldbuskoppler, welche zwei galvanisch und logisch getrennte Feldbusse miteinander koppeln. Diese Feldbuskoppler gibt es in unterschiedlichsten Ausprägungen. Beispielsweise stellt die Firma Siemens AG Feldbuskoppler her, welche die Kopplung folgender Feldbusse ermöglichen: PROFIBUS DP - PROFIBUS PA, PROFIBUS DP - PROFIBUS DP, PROFINET IO - PROFINET IO. Somit lassen sich Feldbuskoppler auch zur Kopplung von Steuerungen verschiedener Hersteller einsetzen, wenn diese den entsprechenden Feldbus unterstützen.

Herkömmliche Koppler besitzen zwei galvanisch getrennte Schnittstellen, welche durch eine Applikationsfirmware im Koppler verbunden werden, um so die an den Schnittstellen angeschlossenen Feldbusse miteinander zu koppeln. Dabei erfolgt die Kopplung über IO-Daten, indem die Ausgabedaten der einen Seite auf Eingabedaten der anderen Seite gespiegelt werden. Mit anderen Worten kopiert die Kopplerapplikation Daten von einer Netzseite auf die andere Netzseite des Kopplers. Dabei sieht jede am Feldbus überlagerte Steuerung (z.B. CPU) ausschließlich ihre Hälfte des Kopplers, und die Datenspiegelung wird mittels der Kopplerfirmware durchgeführt.

Die Eingabe- und Ausgabedaten eines Feldbuskopplers sind dabei je nach unterlagertem Feldbus strukturiert, für PROFIBUS DP und PA z.B. in Modulen, für PROFINET IO in Submodulen. Dabei ist es ohne Relevanz, welche Feldbusse miteinander gekoppelt werden, da nur die Adressmodelle ineinander überführbar sein müssen. Bezüglich der maximal verwendbaren IO-Daten greift dann immer das Minimum der beiden Feldbusdefinitionen und der Geräterestriktionen.

Diese Kopplung von Feldbussen löst zwar elegant den zyklischen Transfer von IO-Daten zwischen einzelnen Steuerungen, jedoch nicht den Transport von Ereignissen oder azyklischen Daten. Zudem hat das Modell Grenzen bezüglich der transportierbaren Datenmengen, welche zwar nur ab und an gesendet werden müssen (so genannte azyklische Daten), jedoch typischerweise deutlich größer als das maximal durch den jeweiligen Feldbus unterstützte IO-Datenvolumen sind.

Um einen azyklischen Datentransfer beispielsweise in einem PROFINET zu ermöglichen, sind aus dem Stand der Technik zwei Möglichkeiten bekannt. PROFINET ist der offene, herstellerübergreifende Industrial Ethernet Standard für die Fertigungs- und Prozessautomatisierung. PROFINET nutzt TCP/IP und IT-Standards und ermöglicht eine durchgängige Kommunikation von der Unternehmensleitebene bis zur Feldebene. Ferner ermöglicht PROFINET eine nahtlose Integration aller Feldbussysteme.

Gemäß einer ersten Möglichkeit kann ein anderes Protokoll (z.B. socketbasierte Kommunikation, wie Open User Communication) genutzt werden. Bei der Nutzung eines anderen Protokolls müssen allerdings Kommunikationsbausteine (Sende/Empfangsbausteine) aufgerufen werden und die Kommunikation geht in diesem Fall nicht über den Koppler. Somit ist dieser Ansatz nicht verwendbar in Situationen, in denen Feldbusse galvanisch getrennt sein müssen und/oder Feldbusse unterschiedliche Protokolle verwenden. Denn aus Anwendersicht ist eine durchgängige Kommunikation nur dann möglich, wenn zwei gleiche Feldbusse gekoppelt werden oder wenn bei der Kopplung unterschiedlicher Feldbusse durchgängig eine herstellerspezifische Lösung verwendet wird, die ein Routing zwischen verschiedenen Feldbussen bietet. Letzteres bedingt einen zusätzlichen Router/Switch/Hub zwischen zu koppelnden Systemen, was zu höheren Kosten für den Anwender führt.

Gemäß einer zweiten Möglichkeit kann ein so genanntes Miniprotokoll auf Basis zyklischer Daten modelliert werden, um einen Handshake zwischen Sender und Empfänger zu ermöglichen, wobei die Kommunikation über einen Feldbuskoppler erfolgt. Allerdings erfordert die Modellierung eines Miniprotokolls eine aufwändige Programmierung durch einen Anwender. Somit ist der Anwender gezwungen, das Problem selbst zu lösen, was jedoch unkomfortabel ist. Denn der Anwender muss die Kommunikationsvorgänge programmieren, was sehr aufwändig ist. Auch wenn der Anwender durch eine Bausteinbibliothek entlastet würde, müssten die dem Miniprotokoll zugrunde liegenden Daten immer zyklisch am Feldbus transportiert werden. Dies bedeutet eine zyklische Grundlast, welche auch dann vorhanden ist, wenn größere Datenmengen (azyklische Daten) nur recht selten transportiert werden. Problematisch ist insbesondere, dass sich der Anwender in solch einem Fall entscheiden muss, ob er einerseits möglichst wenige IO-Daten für das Miniprotokoll vorsieht, um die zyklische Grundlast klein zu halten, oder ob er möglichst viele IO-Daten für das Miniprotokoll vorsieht, um entsprechende Performance aus dem Miniprotokoll zu holen.

Der Erfindung liegt demgegenüber die Aufgabe zu Grunde eine vereinfachte und verbesserte Übertragung azyklischer Daten über einen Feldbuskoppler zu ermöglichen.

Die der Erfindung zu Grunde liegende Aufgabe wird mit den Merkmalen der unabhängigen Patentansprüche gelöst. Bevorzugte Ausführungsformen der Erfindung sind in den abhängigen Patentansprüchen angegeben.

Durch die Erfindung werden ein Feldbuskoppler mit einer ersten und einer zweiten Netzseite und ein Übertragungsverfahren für azyklische Daten über einen solchen Feldbuskoppler geschaffen, wobei jede Netzseite des Feldbuskopplers mindestens eine Schnittstelle zum Anschließen eines Feldbusses besitzt.

Auf der ersten Netzseite ist mindestens ein Ausgangsmodul zum Empfangen eines Ausgangsdatensatzes eines ersten Feldbusses vorgesehen. Dieser Datensatz wird von der ersten auf die zweite Netzseite gespiegelt und in einem Speicher zwischengespeichert. Der gespiegelte Datensatz kann so über ein Eingangsmodul auf der zweiten Netzseite einem zweiten Feldbus als Eingangsdatensatz bereitgestellt werden.

Unter einem Datensatz sind azyklische Daten zu verstehen, welche neben den zyklischen Daten, die den Feldbuskoppler dauerhaft passieren, nur ab und an von einem Subnetz in ein anderes transferiert werden müssen. Dabei sind die azyklischen Daten in Bezug auf die Datenmenge deutlich umfangreicher als die zyklischen Daten, welche oft nur aus einem einzelnen Bit bestehen. Feldbusse wie z.B. PROFINET IO, PROFIBUS DP/PA, etc. bieten bereits heute eine Definition für den Transport von Parametrierungsdaten, Diagnosedaten und anwenderspezifischen Daten, wobei die Transporthülle abkürzend als Datensatz bezeichnet wird. Die Übertragung von Datensätzen über einen Feldbuskoppler wird beispielsweise dann notwendig, wenn Maschinen in einem Subnetz an neue Vorgaben und/oder Bedingungen angepasst werden müssen. Wird beispielsweise eine neue Charge produziert, so müssen die entsprechenden Parameter nur einmalig als Datensatz übertragen werden, der, insbesondere im Verhältnis zu zyklischen Daten, ein umfangreiches Datenvolumen besitzt. Mit anderen Worten erweitert die vorliegende Erfindung herkömmliche Feldbuskoppler um eine azyklische Schnittstelle.

Erfindungsgemäß wird ausgenutzt, dass sich die Datensatzmechanismen in einem Feldbuskoppler besonders leicht projektieren lassen. So wird die Firmware eines herkömmlichen Feldbuskopplers derart angepasst, dass ein Datensatz auf einer Netzseite von einer zugeordneten Steuerung angenommen und auf die andere Netzseite gespiegelt wird. Dort kann der Datensatz dann von einer anderen Steuerung abgerufen werden beziehungsweise an diese Steuerung gesendet werden. Bisher war diese Spiegelung nur für zyklische Daten möglich, nicht jedoch für azyklische Daten. Demnach baut die vorliegende Erfindung auf Standardmechanismen auf, so dass keine aufwändige und komplizierte Programmierung wie z.B. im oben beschriebenen Fall von Miniprotokollen erforderlich ist. Eine solche Nutzung von Standardmechanismen bedeutet Zuverlässigkeit und weniger Aufwand.

Indem die azyklischen Daten nur bei Bedarf (eventgesteuert oder auf Anfrage) übertragen werden und keine zyklische Grundlast vorhanden ist, werden der Feldbuskoppler und die daran angeschlossenen Feldbusse entlastet. Insbesondere kann auf ein Applikationsprotokoll auf Basis zyklischer Daten verzichtet werden, welches eine zyklische Grundlast mit sich bringt. Somit muss sich ein Benutzer nicht weiter darum kümmern, ob und wie azyklische Daten über den Feldbus transportiert werden.

Aber auch wenn den Koppler nun ein Spiegeln von Datensätzen (azyklischer Daten) zulässt, so ist die maximale Größe der unterstützten Datensätze entsprechend den möglichen Mengengerüsten der am Koppler beteiligten Feldbusse beschränkt. Feldbusse bieten spezielle Protokolle für Datensätze, die mit einem Befehl übertragen werden. Feldbusspezifisch hat der Datensatz Beschränkungen bezüglich seiner Länge (bei PROFIBUS DP z.B. 240 Byte, bei PROFINET IO potentiell 4 GByte). Darüber hinaus können auch gerätespezifische Beschränkungen existieren, welche die vom Feldbuskoppler unterstützte Größe weiter einschränken.

Daher kann gemäß einer Ausführungsform der vorliegenden Erfindung vorab im Feldbus die maximale Größe eines zu spiegelnden Datensatzes festgelegt werden, um einerseits eine mögliche Fehlfunktion des Feldbuskopplers zu vermeiden und andererseits größtmögliche Datenmengen übertragen zu können. Die Festlegung der maximalen Größe des zu spiegelnden Datensatzes kann auch von einem Anwender auf einfache Art und Weise realisiert werden. Dazu muss in der Praxis lediglich ein Funktionsbaustein der Firmware des Feldbuskopplers aufgerufen und angepasst werden, ohne dass Programmierkenntnisse erforderlich sind. Allerdings sollte bei der Festlegung der maximalen Größe des zu spiegelnden Datensatzes auch darauf geachtet werden, dass der Speicher, in welchen der Datensatz kopiert wird, ausreichend groß ist, um einen Datensatz mit maximaler Größe zwischenspeichern zu können.

Ein weiterer Vorteil der vorliegenden Erfindung besteht darin, dass die Datensatzübertragung im Koppler unabhängig vom Belastungszustand der angeschlossenen Feldbusse ist. Ein Datensatz wird als Ausgangsdatensatz eines Feldbusses am Feldbuskoppler abgegeben, welcher die weiteren Prozesse wie Spiegeln und Zwischenspeichern durchführt. Mit anderen Worten wird in eine Netzseite des Feldbuskopplers ein Datensatz eingeschrieben und dieser Datensatz von der anderen Netzseite des Feldbuskopplers ausgelesen. Ob die angeschlossenen Feldbusse überlastet oder defekt sind, ist für die ordnungsgemäße Funktionsweise des Feldbuskopplers nicht entscheidend. Dadurch können insbesondere Schwankungen der Zykluszeit (Jitter) im jeweiligen Feldbus beim Datentransfer über den Feldbuskoppler unterdrückt werden.

Jedem Datensatz, welcher über den Feldbuskoppler transferiert werden soll, kann eine Datensatznummer zugeordnet sein, welche zur Identifizierung dient und eine bestimmte Bedeutung für ein am Feldbus angeschlossenes Feldgerät besitzen kann. Es gibt unterschiedliche Arten von Datensatznummern, die in den unterschiedlichen Feldbusnormen festgelegt sind. Manche der Datensatznummern haben eine feststehende Bedeutung, manche sind herstellerspezifisch und manche sind für Anwender nicht zugänglich.

Gemäß einer Ausführungsform der Erfindung sind das mindestens eine Ausgangsmodul und das mindestens eine Eingangsmodul Mischmodule zum Empfangen und Bereitstellen von Daten. Mischmodule haben den Vorteil, dass sich Daten auslesen und einschreiben lassen. In einer dazu alternativen Ausführungsform umfasst der Feldbuskoppler auf beiden Netzseiten mindestens ein Ausgangs- und Eingangsmodul. Dann können beispielsweise bestimmte Adressbereiche für den Eingang beziehungsweise für den Ausgang vorgesehen sein. Dabei sieht eine über einen Feldbus am Feldbuskoppler angeschlossene Steuerung nur die Module der entsprechenden Netzseite, wobei die Steuerung auf Ausgangs(sub-)module schreiben und von Eingangs(sub-)modulen lesen kann. Ist auf der Netzseite der Steuerung ein Misch(sub-)modul vorgesehen, so kann die überlagerte Steuerung davon lesen und darin schreiben.

Wie oben erwähnt sieht die Steuerung auf einer Netzseite des Feldbuskopplers nur die entsprechenden Module, da der Feldbuskoppler die miteinander gekoppelten Subnetze galvanisch und logisch voneinander trennt. Dies bringt den Vorteil mit sich, dass Fehler, Vieren oder Ähnliches den Feldbuskoppler nicht passieren und daher nicht von einem Subnetz in das andere übergeleitet werden können.

Gemäß einer weiteren Ausführungsform der Erfindung ist der mindestens eine Speicher des Feldbuskopplers, in welchen der Datensatz der einen Netzseite gespiegelt wird, ein einzelner Speicherbaustein, der für Daten von der ersten Netzseite und Daten von der zweiten Netzseite logisch unterteilt ist. Beispielsweise ist der einzelne Speicherbaustein als Dual-Port-RAM ausgebildet, bei dem von zwei Seiten gleichzeitig Zugriffe möglich sind. Durch den gleichzeitigen Zugriff können die zwei getrennten Netzseiten des Feldbuskopplers mit gemeinsamen Daten arbeiten ohne sich gegenseitig in der Zugriffsgeschwindigkeit einzuschränken. Dies ist beispielsweise dann von Vorteil, wenn Datensätze in beiden Richtungen übertragen werden müssen. Alternativ dazu umfasst der Feldbuskoppler einen ersten Speicher für Daten von der ersten Netzseite und einen zweiten Speicher für Daten von der zweiten Netzseite als separate Speicherbausteine. Eine galvanische Trennung der Speicher hat den Vorteil, dass sie unabhängig voneinander sind und sich Fehler, Vieren oder Ähnliches des einen Speichers nicht auf den anderen auswirken. Dadurch wird ein höherer Sicherheitsgrad erreicht. Gemäß einer Ausgestaltung kann der logisch unterteilte Speicher oder können die galvanisch getrennten Speicher so eingereichtet sein, dass sie einen Alarm absetzen, sobald ein Fehler oder Virus erkannt wird, so dass der Feldbuskoppler dies im weiteren Arbeitsablauf beachten kann. Beispielsweise könnte der Feldbuskoppler dann einen weiteren Zugriff auf den defekten Speicher verhindern und einen anderen Speicher beziehungsweise Speicherbereich so einrichten, dass er für Daten der beiden Netzseiten logisch unterteilt ist.

Gemäß einer bevorzugten Ausführungsform der vorliegenden Erfindung ist der mindestens eine Speicher des Feldbuskopplers als FIFO-Puffer ausgebildet. Somit kann ein gespiegelter Datensatz so lange im Speicher bleiben, bis er von einer entsprechenden Steuerung abgerufen wird. Ein nachfolgender Datensatz wird dann ebenfalls in den Speicher geschrieben, jedoch ohne den bereits darin befindlichen Datensatz zu überschreiben. Die Ausbildung des Speichers als FIFO-Puffer ist besonders in den Fällen vorteilhaft, in denen die Zykluszeiten auf den Feldbusseiten unterschiedlich sind. Beispielsweise ermöglicht ein FIFO-Puffer, dass auf der einen Netzseite mit hoher Geschwindigkeit (z.B. 12 MBit/s) in den Feldbuskoppler eingeschrieben und auf der anderen Netzseite mit deutlich niedrigerer Geschwindigkeit (z.B. 1,5 MBit/s) ausgelesen wird. Allerdings ist der FIFO-Puffer auch dann von Vorteil, wenn das Subnetz auf der Netzseite des Feldbuskopplers überlastet ist, auf welche der Datensatz gespiegelt wird. Dann kann der Datensatz solange im Puffer verbleiben, bis er abgerufen wird, wobei nachfolgende Datensätze den noch nicht abgeholten Datensatz nicht überschreiben.

Allerdings kann der mindestens eine Speicher auch als Überschreibspeicher ausgebildet sein, in dem ein vorhandener Datensatz, der noch nicht abholt wurde, durch einen neuen Datensatz überschrieben wird. Dann wird ein Datensatz ungepuffert von einer Netzseite auf die andere Netzseite des Feldbuskopplers übertragen. Dies ist beispielsweise dann möglich, wenn zwei gleiche Feldbusse miteinander gekoppelt sind, die insbesondere identische Zykluszeiten aufweisen, und es daher wahrscheinlich ist, dass der gespiegelte Datensatz abgeholt wird bevor ein neuer Datensatz gespiegelt wird.

Gemäß einem weiteren Aspekt der vorliegenden Erfindung wird ein System bereitgestellt, umfassend mindestens zwei Subnetze, in denen einzelne Komponenten über einen Feldbus miteinander verbunden sind, wobei die Feldbusse der Subnetze über mindestens einen Feldbuskoppler wie oben beschrieben miteinander gekoppelt sind. Beispielsweise findet das erfindungsgemäße System in der Fahrzeugherstellung Anwendung. In einer Fertigungslinie von Fahrzeugen ist üblicherweise eine Mehrzahl von Schweißrobotern angeordnet, wobei jeweils einer oder mehrere der Schweißroboter eine Roboterzelle bilden. Die einzelnen Roboterzellen bilden Subnetze und sind über einen Feldbuskoppler miteinander gekoppelt. Über diesen Feldbuskoppler werden zyklische Daten übertragen. Solch zyklische Daten bestehen üblicherweise nur aus einzelnen Bits (0 oder 1), um dem Folgeroboter beispielsweise mitzuteilen, ob der vorhergehende Roboter fertig ist oder nicht. Durch den Einsatz eines erfindungsgemäßen Feldbuskopplers können nun auch größere Datenmengen auf besonders einfache Art und Weise zwischen Geräten der Subnetze ausgetauscht werden, beispielsweise neue Konfigurationsdaten, wodurch sich Reaktionszeiten deutlich verkürzen lassen.

Gemäß einem noch weiteren Aspekt der vorliegenden Erfindung wird ein Computerprogrammprodukt bereitgestellt, insbesondere digitales Speichermedium, mit computerausführbaren Instruktionen zur Durchführung des Übertragungsverfahrens für azyklische Daten über einen Feldbuskoppler wie oben beschrieben.

Nachfolgend werden bevorzugte Ausführungsbeispiele der Erfindung mit Bezugnahme auf die Zeichnung näher erläutert.
- FIG 1: zeigt ein System mit einem Feldbuskoppler gemäß einem Ausführungsbeispiel der vorliegenden Erfindung, und
- FIG 2: zeigt ein Flussdiagramm eines Übertragungsverfahrens für azyklische Daten über Feldbuskoppler gemäβ der vorliegenden Erfindung.

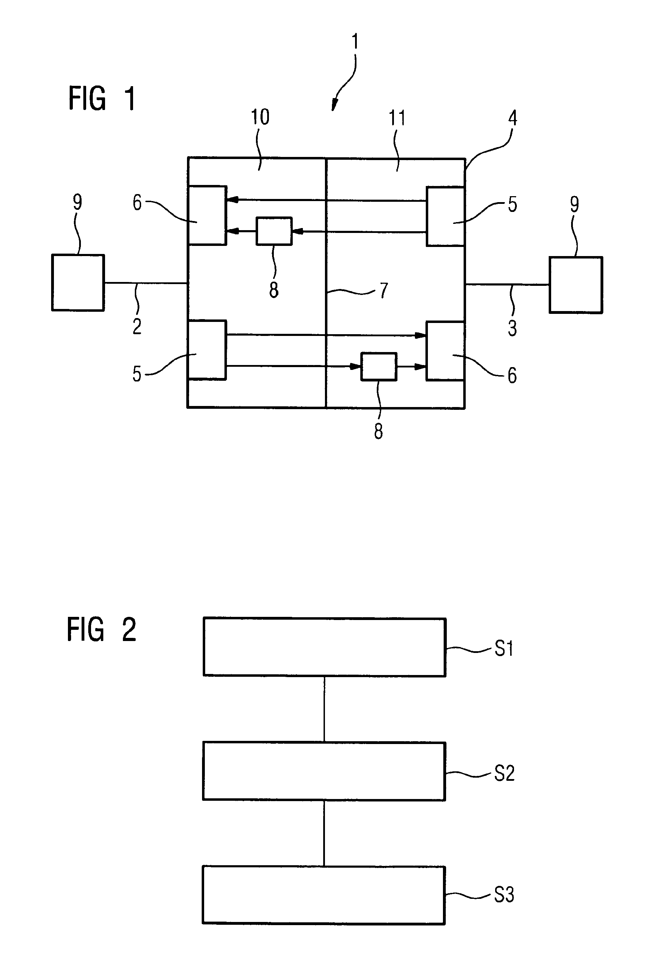

FIG 1 zeigt ein System 1, welches aus zwei Subnetzen besteht, die über einen Feldbuskoppler 4 gemäß einem Ausführungsbeispiel der vorliegenden Erfindung miteinander gekoppelt sind. Der dargestellte Feldbuskoppler 4 ist ein PROFINET(PN)/PROFINET(PN)-Koppler, mit welchem sich schnell und einfach eine anlagenübergreifende, deterministische Datenkopplung zwischen zwei PROFINET-Netzen realisieren lässt. Der in Figur 1 dargestellte PN/PN-Koppler hat somit als ein Gerät zwei PROFINET-Schnittstellen mit jeweils einem Ausgangsmodul 5 und einem Eingangsmodul 6, wobei die Schnittstellen mit dem entsprechenden Subnetz verbunden sind.

Wie grafisch durch eine Linie 7 in der Mitte des Feldbuskopplers 4 angedeutet gewährleistet der Feldbuskoppler eine sichere Trennung der miteinander gekoppelten Subnetze. Dies wird auch dadurch erreicht, dass bei der Projektierung aus dem einen PN/PN-Koppler zwei IO-Vorrichtungen gemacht werden. Der jeweils andere Teil des PN/PN-Kopplers wird als Koppelpartner bezeichnet. Mit Abschluss der Projektierung werden die beiden IO-Vorrichtungen zusammengeführt.

Wie bereits eingangs beschrieben sind die Ausgabe- und Eingabedaten des Feldbuskopplers 4 je nach unterlagertem Feldbus strukturiert, im Falle von PROFINET in Submodulen (nicht dargestellt). Jedes Submodul wird mit einer spezifischen Adresse versehen, in welche ein Datensatz eingeschrieben beziehungsweise von welcher ein Datensatz ausgelesen wird. Im dargstellten Ausführungsbeispiel ist ferner vorgesehen, dass zyklische Daten ungepuffert von einem Ausgangsmodul 5 zu einem Eingangsmodul 6 des Feldbuskopplers 4 gespiegelt werden. Somit kopiert der PN/PN-Koppler permanent zyklische Ausgangsdaten des einen Subnetzes auf die Eingangsdaten des anderen Subnetzes (und umgekehrt). Auf diese Art und Weise können kurze Transferzeiten über den Feldbuskoppler erreicht werden.

Azyklische Daten (Datensätze) werden dagegen von einem Ausgangsmodul 5 in einen Speicher 8, der beispielsweise als FIFO-Puffer ausgebildet ist, auf einer Netzseite 10, 11 des Eingangsmoduls 6 gespiegelt. Somit transportieren im Feldbuskoppler 4 zusammen gespannten Submodule (nicht dargestellt) der linken und rechten Netzseite 10, 11 des Feldbuskopplers 4 die in die eine Netzseite geschriebenen Datensätze in einem FIFO-Pipe-Modell auf die andere Netzseite, wo sie zum Abholen durch eine dort überlagerte Steuerung 9 bereit stehen. Allerdings kann es in manchen Fällen auch sinnvoll sein, die zyklischen Daten gepuffert und/oder die azyklischen Daten ungepuffert zu übertragen.

Um die überlagerte Steuerung 9 über einen neu eingetroffenen Datensatz zu informieren, können unterschiedliche Alternativen genutzt werden. Beispielsweise kann ein Anwenderprogramm der überlagerten Steuerung 9 asynchron über einen Alarm informiert werden (z.B. bei PROFINET IO Upload&Retrieval) oder kann ein Anwenderprogramm der überlagerten Steuerung 9 Informationen in den Nutzdaten pollen (z.B. steigende Flanke eines Bits). Sobald ein Datensatz durch die überlagerte Steuerung 9 abgeholt wurde, werden die Ressourcen im Feldbuskoppler 4 wieder freigegeben. Ferner kann eine Freigabe der Ressourcen auch dann erfolgen, wenn die abholende Steuerung 9 beziehungsweise die versorgende Steuerung 9 ausfällt. In diesem Fall kann die Gegenseite mit Mechanismen entsprechend informiert werden, welche aus dem Stand der Technik bekannt sind (z.B. Ziehen/Stecken Alarm bei IO-Datenausprägung). Um die Ressourcen des Feldbuskopplers 4 einschätzen zu können, darf der Feldbuskoppler das Schreiben von Datensätzen verwehren, wenn seine Ressourcen knapp werden. Dafür kann beispielsweise ein Schwellenwert vorbestimmt werden, ab welchem die Ressourcen des Feldbuskopplers 4 als knapp gelten. Da die Ressourcen beim Abholen der Datensätze auf der Gegenseite freigegeben werden, kann der Anwender durch eine entsprechende applikative Flusskontrolle einen Ressourcenüberlauf verhindern. Außerdem kann die Annahme von Datensätzen in einem Eingangsmodul 6 abgelehnt werden, wenn die Gegenseite dort nicht aufgebaut ist.

FIG 2 zeigt ein Flussdiagramm eines Übertragungsverfahrens für azyklische Daten über einen Feldbuskoppler gemäß der vorliegenden Erfindung. In einem ersten Schritt S1 empfängt der Feldbuskoppler auf seiner ersten Netzseite einen Ausgangsdatensatz eines ersten Feldbusses, welcher an der ersten Netzseite des Feldbuskopplers angeschlossen ist. In einem zweiten Schritt S2 wird dieser Datensatz in einen Speicher des Feldbuskopplers gespiegelt. Anschließend wird in einem dritten Schritt S3 der gespiegelte Datensatz als Eingangsdatensatz für einen zweiten Feldbus bereitgestellt, welcher an der zweiten Netzseite des Feldbuskopplers angeschlossen ist. Dabei kann der Speicher, in welchen der Datensatz gespiegelt wird, ein FIFO-Puffer sein, welcher den gespiegelten Datensatz solange zwischenspeichert, bis er durch eine entsprechende Steuerung abgeholt wird.

## Patentansprüche

1. Feldbuskoppler (4) mit einer ersten und einer zweiten Netzseite (10, 11), wobei jede Netzseite mindestens eine Schnittstelle zum Anschließen eines Feldbusses besitzt, umfassend:
- mindestens ein Ausgangsmodul (5) auf der ersten Netzseite (10) zum Empfangen eines Ausgangsdatensatzes eines ersten Feldbusses (2),
- Mittel zum Spiegeln des Datensatzes von der ersten auf die zweite Netzseite,
- mindestens einen Speicher (8) zum Zwischenspeichern des gespiegelten Datensatzes, und
- mindestens ein Eingangsmodul (6) auf der zweiten Netzseite (11), um einem zweiten Feldbus (3) den gespiegelten Datensatz als Eingangsdatensatz bereitzustellen.

2. Feldbuskoppler (4) nach Anspruch 1, wobei das mindestens eine Ausgangsmodul (5) und das mindestens eine Eingangsmodul (6) Mischmodule zum Empfangen und Bereitstellen von Daten sind.

3. Feldbuskoppler (4) nach Anspruch 1, umfassend mindestens ein Ausgangs- und ein Eingangsmodul (5, 6) auf beiden Netzseiten (10, 11).

4. Feldbuskoppler (4) nach einem der vorhergehenden Ansprüche, wobei der mindestens eine Speicher (8) ein einzelner Speicherbaustein ist, der für Daten von der ersten Netzseite (10) und Daten von der zweiten Netzseite (11) logisch unterteilt ist.

5. Feldbuskoppler (4) nach einem der Ansprüche 1 bis 3, umfassend einen ersten Speicher (8) für Daten von der ersten Netzseite (10) und einen zweiten Speicher (8) für Daten von der zweiten Netzseite (11) als separate Speicherbausteine.

6. Feldbuskoppler (4) nach einem der vorhergehenden Ansprüche, wobei der mindestens eine Speicher (8) als FIFO-Puffer ausgebildet ist.

7. System (1), umfassend mindestens zwei Subnetze, in denen einzelne Komponenten (9) über einen Feldbus miteinander verbunden sind, wobei die Feldbusse (2, 3) der Subnetze über mindestens einen Feldbuskoppler (4) nach einem der vorhergehenden Ansprüche miteinander gekoppelt sind.

8. Übertragungsverfahren für azyklische Daten über einen Feldbuskoppler (4), welcher mindestens zwei Feldbusse (2, 3) miteinander koppelt, umfassend die Schritte:
- Empfangen (S1) eines Ausgangsdatensatzes eines ersten Feldbusses (2) auf einer ersten Netzseite (10) des Feldbuskopplers (4),
- Spiegeln (S2) des Datensatzes in einen Speicher (8) des Feldbuskopplers (4), und
- Bereitstellen (S3) des gespiegelten Datensatzes als Eingangsdatensatz für einen zweiten Feldbus (3) auf der zweiten Netzseite (11) des Feldbuskopplers (4).

9. Übertragungsverfahren nach Anspruch 8, wobei die maximale Größe eines zu spiegelnden Datensatzes festgelegt wird.

10. Computerprogrammprodukt, insbesondere digitales Speichermedium, mit computerausführbaren Instruktionen zur Durchführung des Verfahrens nach Anspruch 8 oder 9.

## Geänderte Patentansprüche

### Geänderte Patentansprüche gemäss Regel 137(2) EPÜ.

**1.** Feldbuskoppler (4) mit einer ersten und einer zweiten Netzseite (10, 11), wobei jede Netzseite mindestens eine Schnittstelle zum Anschließen eines Feldbusses besitzt, umfassend:
- mindestens ein Ausgangsmodul (5) auf der ersten Netzseite (10) zum Empfangen eines azyklischen Ausgangsdatensatzes eines ersten Feldbusses (2) und ein Eingangsmodul (6) auf der ersten Netzseite (10), um dem ersten Feldbus (2) einen azyklischen Eingangsdatensatz bereitzustellen,
- mindestens ein Ausgangsmodul (5) auf der zweiten Netzseite (11) zum Empfangen eines azyklischen Ausgangsdatensatzes eines zweiten Feldbusses (3) und ein Eingangsmodul (6) auf der zweiten Netzseite (11), um dem zweiten Feldbus (3) einen azyklischen Eingangsdatensatz bereitzustellen,
- Mittel zur Übertragung des azyklischen Ausgangsdatensatzes vom Ausgangsmodul auf der ersten Netzseite zum Eingangsmodul auf der zweiten Netzseite,
- Mittel zur Übertragung des azyklischen Ausgangsdatensatzes vom Ausgangsmodul auf der zweiten Netzseite zum Eingangsmodul auf der ersten Netzseite, und
- mindestens einen Speicher (8) zum Zwischenspeichern des übertragenen Datensatzes.

**2.** Feldbuskoppler (4) nach Anspruch 1, wobei das mindestens eine Ausgangsmodul (5) und das mindestens eine Eingangsmodul (6) Mischmodule zum Empfangen und Bereitstellen von Daten sind.

**3.** Feldbuskoppler (4) nach einem der vorhergehenden Ansprüche, wobei der mindestens eine Speicher (8) ein einzelner Speicherbaustein ist, der für Daten von der ersten Netzseite (10) und Daten von der zweiten Netzseite (11) logisch unterteilt ist.

**4.** Feldbuskoppler (4) nach einem der Ansprüche 1 bis 2, umfassend einen ersten Speicher (8) für Daten von der ersten Netzseite (10) und einen zweiten Speicher (8) für Daten von der zweiten Netzseite (11) als separate Speicherbausteine.

**5.** Feldbuskoppler (4) nach einem der vorhergehenden Ansprüche, wobei der mindestens eine Speicher (8) als FIFO-Puffer ausgebildet ist.

**6.** System (1), umfassend mindestens zwei Subnetze, in denen einzelne Komponenten (9) über einen Feldbus miteinander verbunden sind, wobei die Feldbusse (2, 3) der Subnetze über mindestens einen Feldbuskoppler (4) nach einem der vorhergehenden Ansprüche miteinander gekoppelt sind.

**7.** Übertragungsverfahren für azyklische Daten über einen Feldbuskoppler (4), welcher mindestens zwei Feldbusse (2, 3) miteinander koppelt, umfassend die Schritte:
- Empfangen (S1) eines Ausgangsdatensatzes eines ersten Feldbusses (2) auf einer ersten Netzseite (10) des Feldbuskopplers (4),
- Speichern (S2) des Datensatzes in einem Speicher (8) des Feldbuskopplers (4), und
- Bereitstellen (S3) des gespeicherten Datensatzes als Eingangsdatensatz für einen zweiten Feldbus (3) auf der zweiten Netzseite (11) des Feldbuskopplers (4).

**8.** Übertragungsverfahren nach Anspruch 7, wobei die maximale Größe eines zu übertragenden Datensatzes festgelegt wird.

**9.** Computerprogrammprodukt, insbesondere digitales Speichermedium, mit computerausführbaren Instruktionen zur Durchführung des Verfahrens nach Anspruch 8 oder 9.
